# FASCICULE DE BREVET EUROPEEN

(11) **EP 3 365 556 B1**
(45) Date de publication et mention de la délivrance du brevet: **29.11.2023**
(21) Numéro de dépôt: 16784880.3
(22) Date de dépôt: 19.10.2016
(51) Int. Cl.: F03G 3/00

(54) **SYSTÈME DE STOCKAGE ET GÉNÉRATION D'ÉNERGIE ÉLECTRIQUE POUR MILIEU AQUATIQUE ET SUBAQUATIQUE**
ELEKTRISCHES ENERGIEERZEUGUNGS- UND SPEICHERSYSTEM FÜR AQUATISCHE UND SUBAQUATISCHE UMGEBUNGEN
ELETRIC ENERGY GENERATION AND STORAGE SYSTEM FOR AQUATIC AND SUBAQUATIC ENVIRONMENT

(30) Priorité: 19.10.2015 FR 1502200
(43) Date de publication de la demande: 29.08.2018
(73) Titulaire: Stevens, Christophe, 03140 Charroux (FR)
(72) Inventeur: Stevens, Christophe, 03140 Charroux (FR)
(74) Mandataire: Kirkpatrick
(86) Numéro de dépôt international: PCT/EP2016/075101
(87) Numéro de publication internationale: WO 2017/067987

(56) Documents cités:
- WO-A1-2014/160522
- WO-A1-2015/114440
- CN-A- 103 867 409
- US-A1- 2012 112 472
- US-A1- 2014 361 542

## Description

### DOMAINE TECHNIQUE DE L'INVENTION

La présente invention concerne un dispositif de stockage et de production d'énergie en milieu aquatique, en particulier subaquatique.

### ETAT DE LA TECHNIQUE ANTERIEURE

Le document US 2012 112472 A1 divulgue une système de stockage et génération d'énergie électrique selon le préambule de la revendication 1.

Le document de brevet WO2015114440 décrit l'art antérieur et propose un tel système comportant une plateforme flottante à la surface d'un plan d'eau (lac ou mer), munie d'un système d'ascenseur permettant de monter et descendre des poids un à un, afin de stocker et de générer de l'électricité à travers un moteur/générateur électrique. Les poids sont stockés en position haute en étant attachés à un ou plusieurs flotteurs dont une partie au moins se trouve en surface lorsque lesdits poids sont stockés en position haute. En position basse, les poids sont déposés au fond du plan d'eau. Avant et après avoir été entraîné par ou d'entraîner le système d'ascenseur, les poids peuvent être accrochés puis décrochés du système d'ascenseur par l'utilisation de robots sous-marins équipés d'un bras articulé.

La plateforme et une partie au moins de la composante flottante des poids étant positionnés en surface, ils sont soumis aux vents et aux courants de surface ce qui génère des coûts d'ancrage et de stabilisation très importants, particulièrement si le système doit être dimensionné pour résister à de fortes tempêtes et à une forte houle.

Lorsque la mer est agitée, les mouvements que vont subir la plateforme et dans une moindre mesure les poids stockés en position haute, en particulier les mouvements d'oscillation verticaux, peuvent se répercuter sur le système d'ascenseur, en particulier sur le câble et perturber les opérations d'accrochage et de décrochage des poids au câble du système d'ascenseur. Les mouvements oscillatoires verticaux des poids accrochés au système d'ascenseur, peuvent également empêcher de déposer les poids délicatement sur le fond du plan d'eau et ainsi générer des coûts plus importants desdits poids ou réduire leur durée de vie.

La présente invention propose entre autres, d'atténuer ou de supprimer l'exposition au vent et au courant de surface de la plateforme et des poids stockés en position haute et d'atténuer ou de supprimer les mouvements de la plateforme et leur répercussion sur les opérations d'accrochage, de décrochage et de dépôt des poids sur le fond du plan d'eau.

Selon l'invention, les poids en position haute de stockage d'énergie et la plateforme de l'ascenseur sont stabilisés à une profondeur telle que l'effet du vent et des courants sont fortement diminués.

### EXPOSE DE L'INVENTION

Tout d'abord, un premier objet de l'invention consiste à prévoir un système de stockage et génération d'énergie électrique permettant de faire face à des pics de consommation d'énergie électrique en alternance avec une consommation faible.

Un autre objet de l'invention consiste à prévoir un système de stockage et génération d'énergie électrique en grande quantité.

Encore un autre objet de l'invention consiste à prévoir un système de stockage et génération d'énergie électrique autonome qui fonctionne à la demande en fonction de pics de consommation.

Un autre objet de l'invention consiste à prévoir une solution qui utilise l'espace disponible, de manière la plus écologique possible, et qui est à l'abri des intempéries.

Pour ce faire, l'invention prévoit un système de stockage et génération d'énergie électrique pour milieu aquatique selon l'objet de la revendication 1.

Selon un mode de réalisation avantageux, le système comporte:
- une pluralité de poids, dont la masse volumique est supérieure à celle de l'eau.
- un ascenseur-générateur, agencé en coopération avec les poids et disposé pour permettre, en mode générateur, la descente en zone de fond lesdits poids,
   et, en mode moteur, de remonter vers la surface lesdits poids ;
- une plateforme, apte à supporter la portion supérieure de l'ascenseur-générateur lorsque celui-ci est chargé ou déchargé de poids (135). Cette plateforme sera nommée PAG dans la suite de la présente description (Plateforme d'ascenseur générateur).
- des câbles d'ancrage reliant la plateforme PAG au fond du plan d'eau et exerçant un force sur la plateforme vers le bas et permettant de maintenir la plateforme à une profondeur suffisante sous la surface et d'éviter qu'elle ne monte jusqu'au niveau de la surface.
- des flotteurs fixés à la plateforme PAG, exerçant une force vers le haut, opposée aux câbles d'ancrage et permettant de maintenir la plateforme à la profondeur voulue et d'éviter qu'elle ne coule, en particulier lorsque l'ascenseur est chargé d'un poids.
- Une seconde plateforme permettant de suspendre les poids lorsque celles-ci doivent être stockées en position haute. Cette plateforme sera nommée PAP dans la suite de la présente description (plateforme d'accrochage des poids). Cette plateforme PAP est située sous la surface et maintenue à une profondeur donnée à proximité de la plateforme de l'ascenseur PAG.
- des câbles d'ancrage reliant la plateforme PAP au fond du plan d'eau permettent de la maintenir à une profondeur suffisante sous la surface du plan d'eau.
- des flotteurs fixés à la plateforme PAP ou compris dans ladite plateforme, lui permettent d'éviter qu'elle ne coule en particulier lorsqu'elle est chargée de poids qui lui sont accrochés. Ces flotteurs peuvent être constitués d'un réservoir souple de gaz ou d'un réservoir rigide rempli d'eau ou de gaz. Ces flotteurs sont pourvus d'orifices permettant d'injecter ou d'évacuer du gaz ou de l'eau à partir d'un moyen tel qu'un compresseur, de telle sorte qu'il soit possible de modifier le volume de gaz qu'ils contiennent et donc leur pouvoir flottant. Cette caractéristique permet d'adapter en permanence le pouvoir flottant de la plateforme PAP en fonction du nombre de poids qui lui est accroché et ainsi réduire l'épaisseur et le coût des câbles d'ancrage reliant la plateforme PAP au fond marin.
- un moteur-réversible ou un moteur et un générateur électrique, coopérants avec l'ascenseur-générateur et permettant, en mode générateur, la production d'énergie électrique grâce à l'action des poids lors de leur descente, et, en mode moteur, l'actionnement de l'ascenseur pour effectuer une remontée des poids.

Selon une telle architecture, l'invention propose une solution à la demande qui permet de gérer les pics de consommation électrique tout comme les périodes plus creuses.

Selon un mode de réalisation avantageux, le système possède un moteur réversible ou un moteur et un générateur, portés par la plateforme de l'ascenseur (PAG), qui coopère avec la portion supérieure de l'ascenseur-générateur.

Selon un autre mode de réalisation avantageux, l'ascenseur-générateur est constitué par un ensemble de poulies actionnant une courroie entre la plateforme PAG et le fond du plan d'eau.

Selon un autre mode de réalisation avantageux, l'ensemble de poulies comporte une ou plusieurs poulies proches de la surface (203) portées par la plateforme PAG et une ou plusieurs poulies de fond.

Selon un autre mode de réalisation avantageux, les poulies portées par la plateforme PAG, en particulier la poulie de surface (103), coopèrent mécaniquement avec le moteur réversible par l'entremise d'une transmission.

Selon un autre mode de réalisation avantageux, 'ascenseur-générateur est constitué par un treuil porté par la plateforme PAG, un câble de treuil et au moins un crochet.

De manière avantageuse, le treuil coopère mécaniquement avec le moteur réversible par l'entremise d'une transmission.

Egalement de manière avantageuse, les poids sont de forme sensiblement allongée.

Egalement de manière avantageuse, chacun des flotteurs de la plateforme PAP comporte une commande de gestion des flux fluidiques de la quantité d'air et d'eau en coopération fluidique avec l'intérieur du réservoir et l'extérieur de la plateforme.

Selon un mode de réalisation, la barge (plateforme flottante) comprenant le compresseur peut également être positionnée plusieurs dizaines de mètres sous la surface de l'eau et être reliée à l'atmosphère par un conduit dont une extrémité est flottante en surface ; ou relié à un réservoir d'air pouvant se trouver en surface ou sous la surface.

### DESCRIPTION DES FIGURES

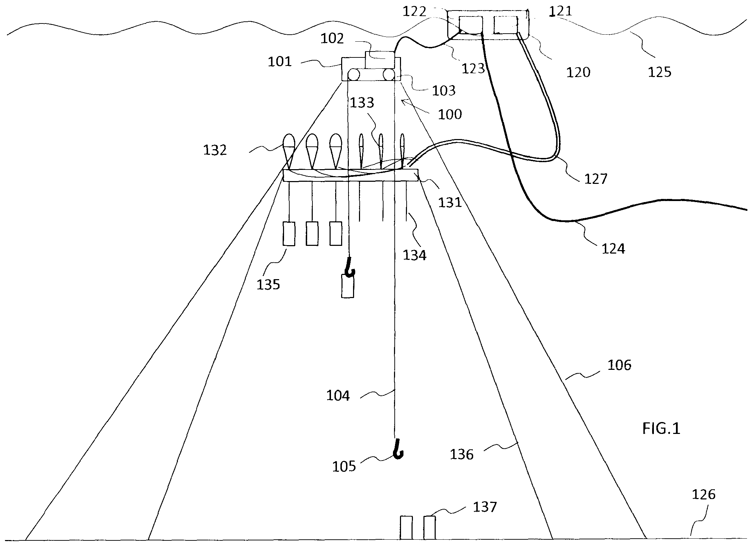

Tous les détails de réalisation sont donnés dans la description qui suit, complétée par les figures 1 à 19, présentées uniquement à des fins d'exemples non limitatifs, et dans lesquelles :
- la figure 1 est une représentation schématique d'un premier exemple de réalisation d'un système de stockage et génération d'énergie en milieu aquatique selon l'invention mis en oeuvre par un système comprenant une plateforme ascenseur (PAG) positionnée plusieurs dizaines de mètres sous la surface et pourvue d'un câble comprenant un crochet à chacune de ses extrémités et une plateforme d'accrochage de poids (PAP) séparée de la plateforme PAG et suspendue à une pluralité de flotteurs souples, ladite plateforme PAP étant aussi positionnée plusieurs dizaines de mètres sous la surface. La figure 1 fait également apparaître une barge en surface comprenant notamment un compresseur.
   La profondeur de quelques dizaines de mètres, des plateformes PAP et PAG, est donnée à titre indicatif, la profondeur pouvant être égale ou supérieure à zéro.
- la figure 2 est une représentation schématique détaillée de la plateforme d'accrochage de poids PAP figurant dans la figure 1 ; Elle comprend notamment des treuils fixés aux câbles d'ancrage et elle fait apparaître les conduits de gaz comprimé permettant d'injecter ou d'évacuer du gaz dans les flotteurs souples.

La figure 3 est une représentation schématique d'un exemple de réalisation de plateforme PAP comprenant des flotteurs sous forme de ballast pouvant être remplis d'eau ou d'air.
La figure 4 est une représentation schématique d'un exemple de réalisation de plateforme PAP comprenant des flotteurs souples fixés à la plateforme par des câbles de longueur variable et permettant ainsi de faire varier la profondeur et donc le volume desdits flotteurs en fonction du besoin.
La figure 5 est une représentation schématique d'un exemple de réalisation de plateforme PAP comprenant des flotteurs sous forme de ballast fixés à ladite plateforme par des câbles de longueur variable et permettant ainsi de faire varier la profondeur et donc le volume desdits flotteurs en fonction du besoin.
La figure 6 illustre un autre mode de réalisation dans lequel la plateforme PAG est intégrée à la plateforme PAP. La plateforme PAG y est représentée comme pouvant se mouvoir selon un axe sur un rail intégré dans la plateforme PAP.
La figure 7 illustre un autre mode de réalisation dans lequel deux plateformes PAG sont intégrée à une plateforme PAP.
La figure 8 fait apparaître un ensemble de câbles d'ancrage sous forme de haubans fixés à la plateforme en différents point le long de ladite plateforme.
La figure 9 illustre un autre mode de réalisation de la plateforme ascenseur PAG dans laquelle le câble principal est relié à une poulie positionnée près du fond du plan d'eau.
La figure 10 illustre un autre mode de réalisation de la plateforme ascenseur PAG dans laquelle le câble principal est relié à une poulie fixée sur un charriot posé sur le fond du plan d'eau.
La figure 11 est une représentation schématique détaillée du chariot vue de profil.
La figure 12 est une représentation schématique détaillée du chariot vue de face.
La figure 13 est une représentation schématique détaillée de la plateforme ascenseur PAG pourvue d'une poulie positionnée proche du fond marin et de son système de compensation de longueur de câble comprenant notamment des poulies motrices, des poulies de renvoi et un treuil.
La figure 14 est une représentation schématique détaillée de la plateforme ascenseur PAG pourvue d'un câble avec crochet à ses deux extrémités et de son système de compensation de longueur de câble comprenant notamment des poulies motrices, des poulies de renvoi et un treuil.
La figure 20 illustre une variante du système d'ascenseur générateur.

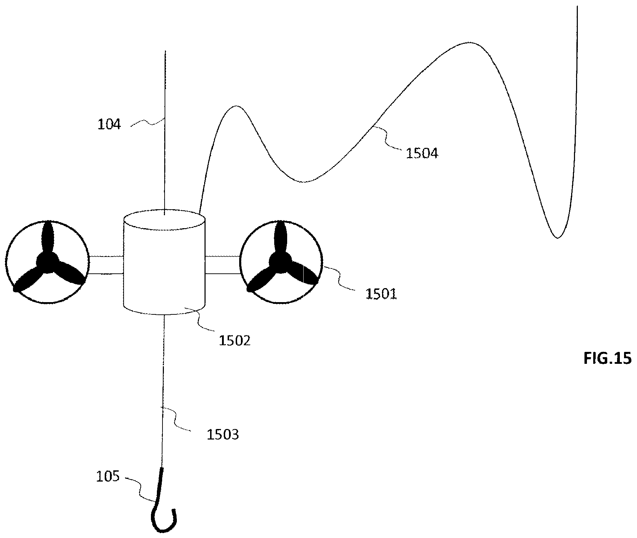

La figure 15 illustre un mode de réalisation des crochets permettant de contrôler les mouvements giratoires et transversaux dudit crochet au moyen d'un ensemble de propulseurs.

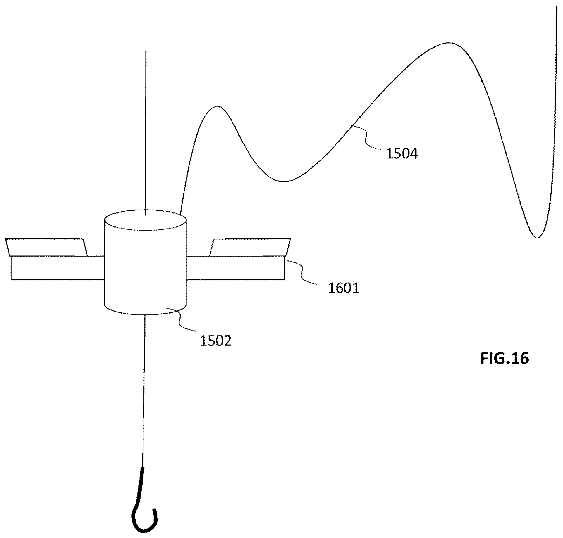

La figure 16 illustre un mode de réalisation des crochets permettant de contrôler les mouvements giratoires dudit crochet au moyen d'un ensemble d'ailerons.

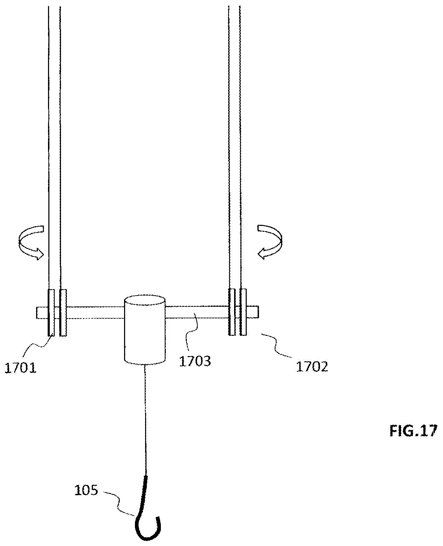

La figure 17 illustre un mode de réalisation des crochets comprenant au moins deux moufles de part et d'autre du crochet permettant notamment d'utiliser au moins deux câbles dont les sens d'enroulement des torons sont opposés.

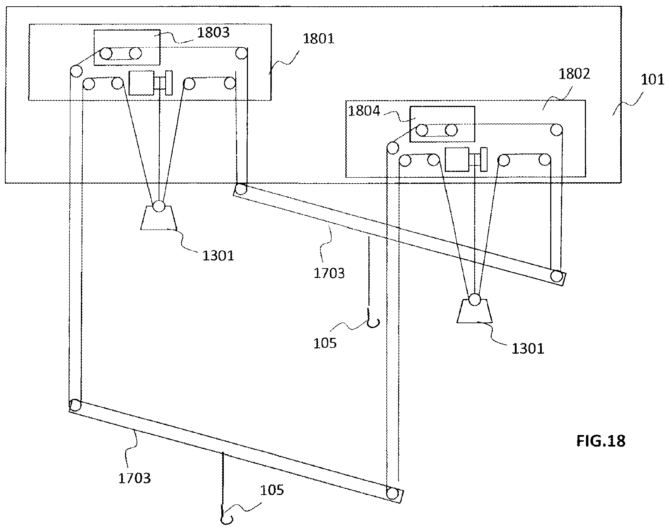

La figure 18 illustre une façon avantageuse de relier les deux câbles présentés sur la figure 17, de telle sorte qu'ils passent dans des jeux de poulies distincts au niveau de la plateforme PAG. Lesdites poulies sont des poulies motrices, et des poulies de renvoi. La figure 18 ne présente pas les accouplements éventuels pouvant être mis en oeuvre entre les poulies motrices.

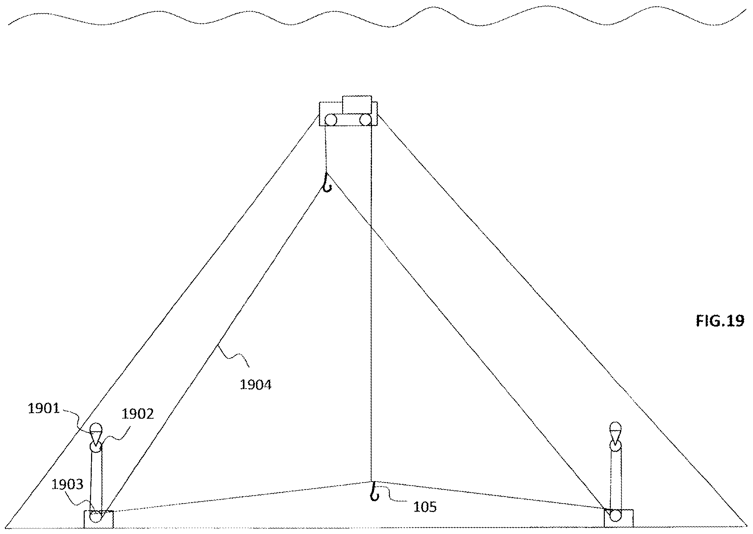

La figure 19 est une représentation schématique de câbles secondaires dont chaque extrémité est fixée à chacun des deux crochets et passant par des poulies de renvoi fixées sur le fond marin et à des flotteurs.

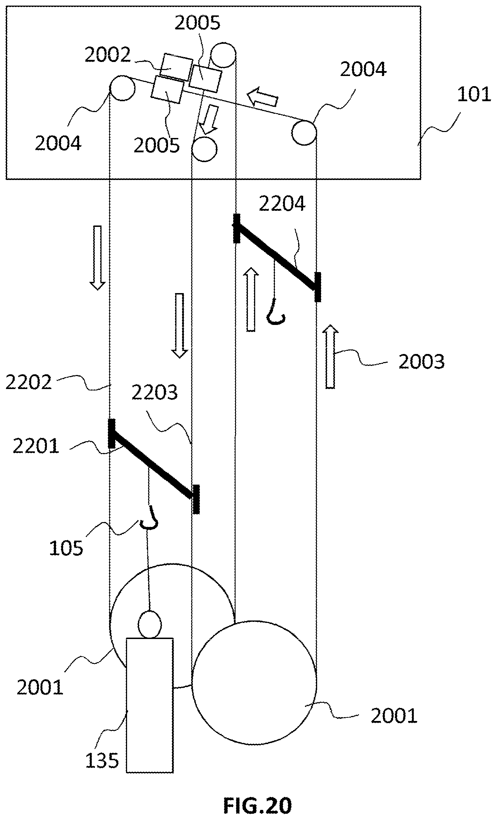

La figure 20 illustre une variante du système d'ascenseur générateur.

### DESCRIPTION DETAILLEE DE L'INVENTION

La figure 1 illustre un premier mode de réalisation d'un système de stockage de l'énergie électrique pour milieu marin et sous-marin selon l'invention dans lequel l'énergie potentielle est stockée au moyen d'une pluralité de poids immergés (135), qui lors de leur descente vers le fond du plan d'eau (126), actionnent un générateur afin de produire de l'énergie électrique. Cette énergie est avantageusement produite lors de périodes de grande consommation d'un réseau principal relié au système de l'invention, afin de soulager le réseau principal de production d'énergie. A l'inverse, lorsqu'un excès d'électricité est disponible sur le réseau, le système fonctionne en mode moteur en remontant les poids (137) une à une depuis le fond du plan d'eau jusqu'à une hauteur située sous la surface.

Le système comporte avantageusement un grand nombre de poids, permettant ainsi de transformer de l'énergie de façon répétée (ou continue), de façon durable.

Le système illustré comporte une plateforme principale PAG (101) comprenant des flotteurs non présentés sur le dessin. Cette plateforme PAG est stabilisée sous la surface (125) par des câbles d'ancrage (106). La plateforme PAG est localisée à une profondeur de plusieurs dizaines de mètres afin de minimiser son exposition aux courants de surface. Cette plateforme comprend un système d'ascenseur générateur constitué d'un câble (104) pourvu à chaque extrémité d'au moins un crochet (105) et passant par des poulies de renvoi (103) et des poulies motrices. Les poulies motrices sont accouplées à un moteur et un générateur électrique via un réducteur de couple, un système d'embrayage et une boîte de vitesse. L'ensemble (102) représenté sur la figure 1, comprend le moteur, le générateur, le réducteur, l'embrayage, la boîte de vitesse et les poulies motrices.

Le moteur peut être réversible et fonctionner en mode générateur, dans ce cas un générateur n'est pas nécessaire. Le moteur et le générateur sont connectés par des câbles électriques (123) à une plateforme flottante (120) située en surface (125). Le courant électrique peut ensuite être transformé en un niveau de tension différent par un transformateur ou être converti de courant continu à courant alternatif ou inversement par un convertisseur. Le transformateur et le convertisseur sont présentés par (122) sur la figure. Un câble électrique relie la plateforme (120) au réseau électrique via un câble électrique sous-marin (124).

Le système comprend également une plateforme d'accrochage PAP (131) permettant d'y accrocher les poids lorsqu'elles sont stockées en position haute. Cette plateforme est située à proximité de la plateforme de l'ascenseur générateur, afin notamment, de permettre l'accrochage d'un poids à l'ascenseur générateur avant le décrochage desdits poids de la plateforme PAP en phase de production d'électricité, et inversement en phase de stockage. Ces opérations permettant d'accrocher ou de décrocher les poids de la plateforme PAP ou au câble de l'ascenseur peuvent avantageusement être réalisées au moyens d'élingues ou d'une pluralité d'élingues disponibles pour chaque poids.

La plateforme d'accrochage PAP comprend une pluralité de flotteurs (132) dont le volume variable permet d'ajuster en permanence le pouvoir flottant de ladite plateforme PAP au nombre de poids qui lui sont accrochés. Les flotteurs peuvent être remplis (132) ou vidés (133) d'un gaz via un ensemble de conduits de gaz comprimé reliés à un compresseur (121) situé sur la plateforme flottante (120) Les poids en position haute (135) sont accrochés à la plateforme PAP par l'intermédiaire d'un câble d'accroche (134) .

La plateforme d'accrochage PAP est stabilisée et reliée au fond du plan d'eau par l'intermédiaire de câbles d'ancrage (136) .

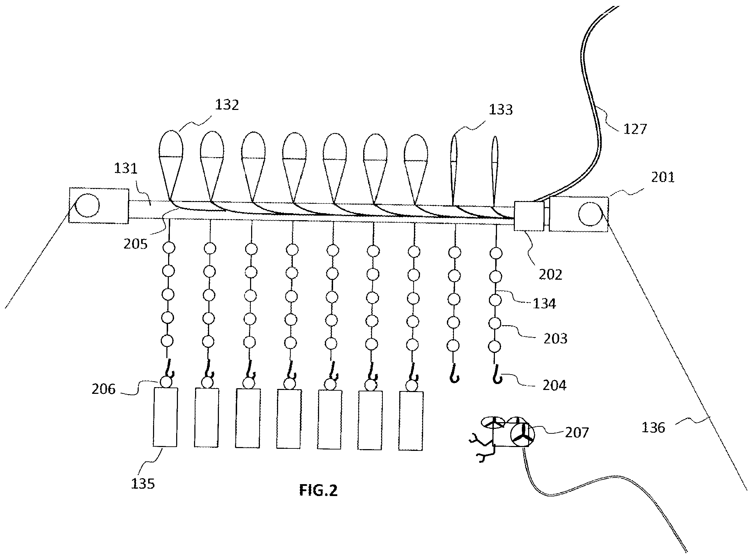

La figure 2 illustre de façon plus détaillée la plateforme d'accrochage PAP de poids. Elle fait apparaître des treuils (201) reliés aux câbles d'ancrage (136). Ces treuils ont pour fonction d'adapter la position horizontale de la plateforme PAP en cas de besoin, notamment pour se positionner précisément au-dessus du lieu de saisie sur la plateforme d'accrochage PAP et du lieu de dépôt des poids.

Ces treuils permettent également d'ajuster la profondeur de la plateforme PAP.

Au moins un conduit (205) par flotteur (132, 133) effectue la jonction entre chaque flotteur et un dispositif (202) permettant de connecter de façon sélective lesdits conduits au conduit principal (127).

La figure 2 fait également apparaître de façon détaillée le dispositif d'accrochage des poids. Celui-ci comprend le câble d'accroche (134) sur lequel sont positionnés des flotteurs (203) afin de réduire le poids relatif desdits câbles et faciliter leur manipulation ainsi que celle des crochets (204) par des robots sous-marins de type ROV ou « Remotely Operated Véhicule », en français « véhicule téléguidé » (207). Un dispositif d'accrochage (206) pouvant prendre la forme d'un anneau permet d'accrocher le poids (135) au crochet (204). En variante, des élingues non présentées sur la figure 2 peuvent joindre le poids (135) au dispositif d'accrochage (206). Plusieurs élingues et dispositif d'accrochage (206) peuvent être fixés sur chaque poids (135). Toutes les élingues peuvent être pourvues de flotteurs afin de réduire la masse relative des dites élingues et faciliter leur manipulation par les ROV (207). Plusieurs élingues peuvent également être fixées entre les crochets (105) et le câble d'ascenseur (104) .

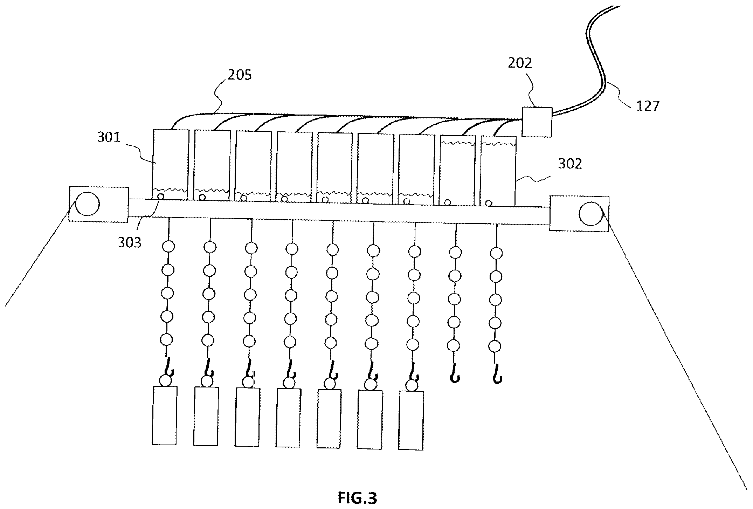

La figure 3 illustre une variante de la plateforme d'accrochage (PAP) présentée dans la figure 1 et 2. Les flotteurs y sont constitués par des ballasts pouvant être remplis (302) ou vidés (301) d'un volume d'eau par un orifice situé dans leur partie inférieure et reliant l'intérieur de ces ballasts à l'extérieur du système. Le remplissage ou la vidange de ces ballasts peuvent avantageusement être réalisés par l'injection de gaz comprimé par un orifice et une valve situés dans la partie supérieure et reliés via un ou plusieurs conduits (205) à un compresseur situé en surface de façon similaire à celle présentée dans les figures 1 et 2.

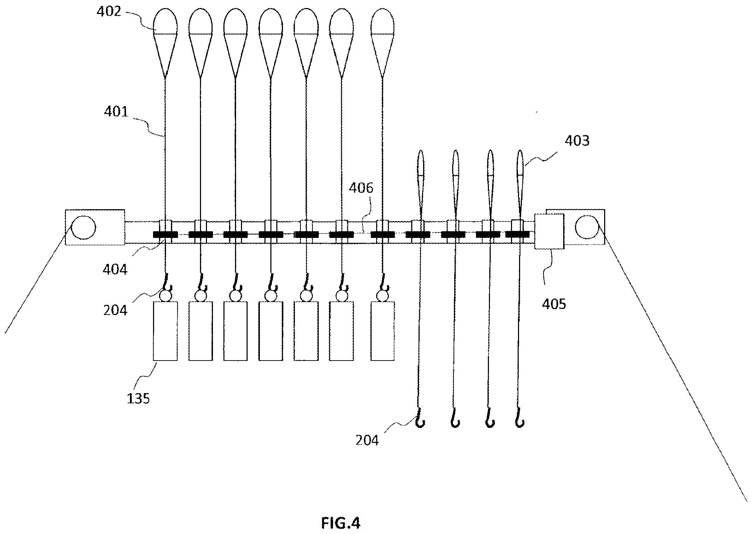

La figure 4 illustre une variante de la plateforme d'accrochage (PAP) présentée dans les figures 1, 2 et 3. Chaque flotteur est accroché directement à un poids par l'intermédiaire de câbles (401) passant dans un orifice (404) traversant la plateforme de haut en bas. Cet orifice est équipé d'un mécanisme de blocage du câble qui peut être commandé à distance, de telle sorte que lorsqu'un poids est décroché de la plateforme PAP, le câble (401) puisse être bloqué et solidarisé à la plateforme en un point plus proche du flotteur. En étant positionné à une profondeur plus importante et du fait de la pression plus importante, le volume du flotteur souple sera réduit (403) et il exercera une force ascendante plus faible afin de compenser l'absence de poids. Le mécanisme de blocage du câble peut avantageusement être similaire aux freins conventionnels utilisés sur des ascenseurs, monte-charges, grues ou téléphériques. Selon un mode de réalisation non exclusif, chacun de ces mécanismes peuvent être actionnés de façon sélective et avec une amplitude variable et mus par une force électrique électromagnétique, hydraulique ou pneumatique véhiculée par un circuit (406) relié à un dispositif de distribution, de contrôle et de commande (405).

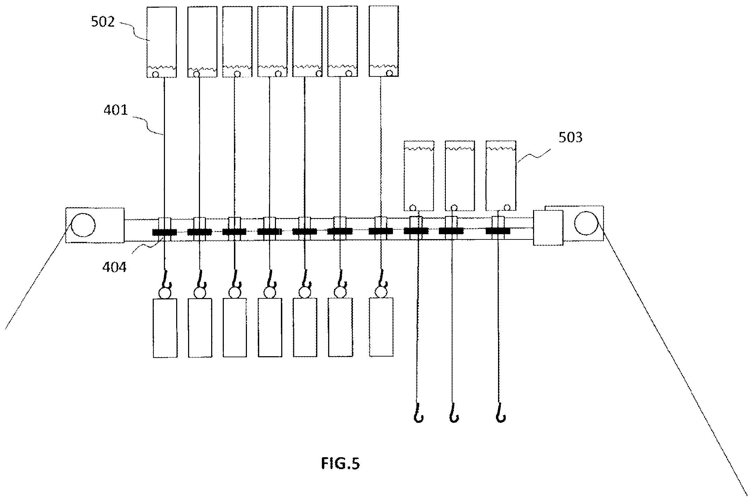

La figure 5 représente une variante du système présenté à la figure 4. Les flotteurs sont constitués de ballasts dont le volume d'eau qu'ils contiennent varie avec la profondeur et donc la pression extérieure. Selon que les poids seront accrochés ou décrochés de la plateforme PAP, le volume d'air compris dans ces ballasts sera respectivement important (502) ou réduit (503). En conséquence, leur pouvoir flottant baissera lorsqu'ils seront solidarisés à la plateforme PAP à une profondeur plus importante.

Les figures 4 et 5 représentent des variantes pour lesquelles, l'injection d'un gaz comprimé par l'intermédiaire d'un compresseur n'est pas nécessaire. L'invention comprend d'autres variantes pouvant combiner simultanément les variantes présentées sur la figure 2, 3, 4 et 5.

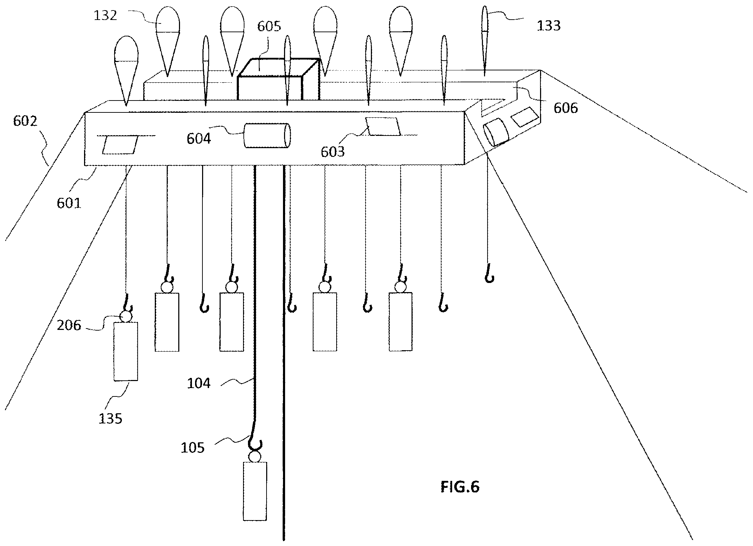

La figure 6 illustre une variante de l'invention selon laquelle la plateforme ascenseur générateur PAG (605) est solidarisée à la plateforme d'accrochage des poids PAP (601) par l'intermédiaire d'un système de rail (606) ou tout autre moyen permettant à la plateforme ascenseur PAG de se mouvoir sur la plateforme d'accrochage PAP selon un ou deux axes. De tels moyens peuvent inclure (mais de façon non limitative) des systèmes similaires à ceux utilisés sur les palans montés sur ponts roulants, un charriot mû le long d'une crémaillère, ou par des treuils.

Des ailerons mobiles (603) et des propulseurs à hélice (604) peuvent être positionnés autour de la plateforme PAP afin de faciliter sa stabilisation lorsque ladite plateforme est localisée dans une zone affectée par des courants sous-marins.

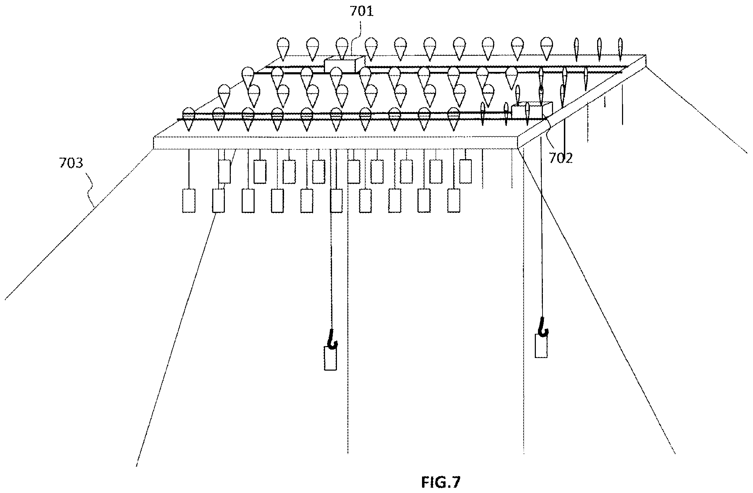

La figure 7 illustre une variante du système présenté sur la figure 6. Deux plateformes ascenseurs PAG (701 et 702) équipent une seule plateforme d'accrochage PAP.

L'invention prévoit également des variantes selon lesquels une plateforme d'accrochage (PAP) peut comprendre plus de deux plateformes ascenseurs PAG, ou selon lesquels, plusieurs plateformes d'accrochage PAP peuvent être utilisées pour une seule plateforme ascenseur PAG.

L'invention prévoit également des variantes selon lesquelles la plateforme d'accrochage PAP est située à la surface avec une plateforme ascenseur PAG située sous la surface ou au contraire une plateforme ascenseur PAG située à la surface et une plateforme d'accrochage PAP située sous la surface. Dans le cas ou la plateforme d'accrochage PAP est située en surface, une partie au moins des composants flottants de cet ensemble qu'elle constitue sont situés en surface, tel que décrit dans le document de brevet WO2015114440

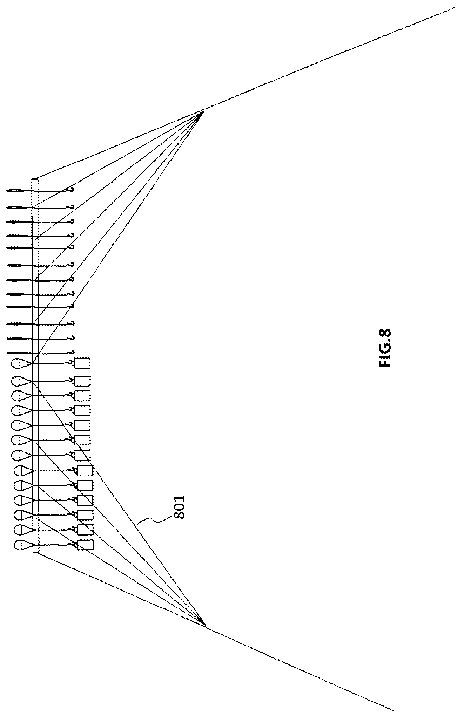

La figure 8 représente un dispositif de câbles d'ancrage à haubans (801) permettant de reprendre les efforts de traction descendants en différents points de la plateforme PAP et ainsi réduire les efforts de flexion dans ladite plateforme et d'équilibrer d'avantage les forces des câbles d'ancrage avec les forces exercées par les flotteurs.

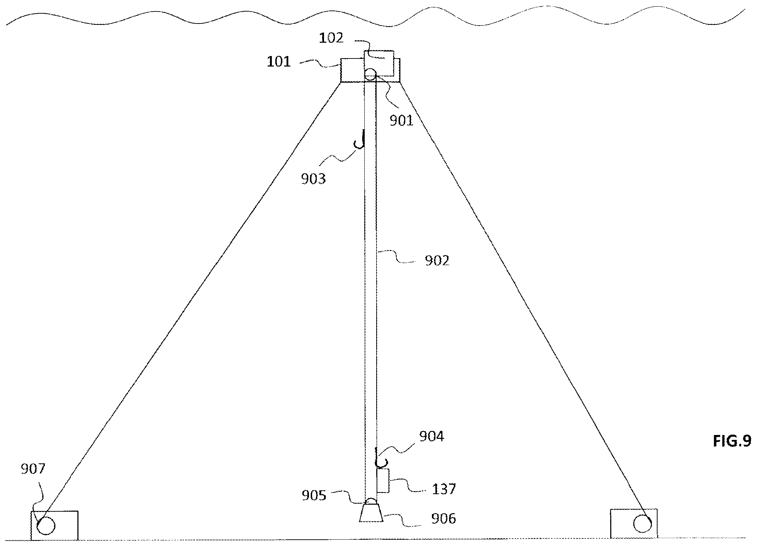

La figure 9 illustre une variante du système d'ascenseur générateur. Dans ce système, le câble (902) de l'ascenseur est fermé et passe par une poulie de renvoi (905) située à proximité du fond du plan d'eau. Le câble est tendu grâce à un poids (906) fixé à la poulie. Deux crochets (903, 904) fixés sur le câble permettent d'accrocher les poids (137) qui seront descendues un à un puis remontés un à un depuis le fond du plan d'eau.

Des treuils (907) sont situés sur le fond marin afin d'adapter la longueur des câbles d'ancrage et faciliter les mouvements de la plateforme de l'ascenseur PAG.

Des propulseurs à hélice, non présentés sur la figure, peuvent être fixés à la plateforme de l'ascenseur PAG ou au niveau du poids (906) afin de rendre leur positionnement plus précis.

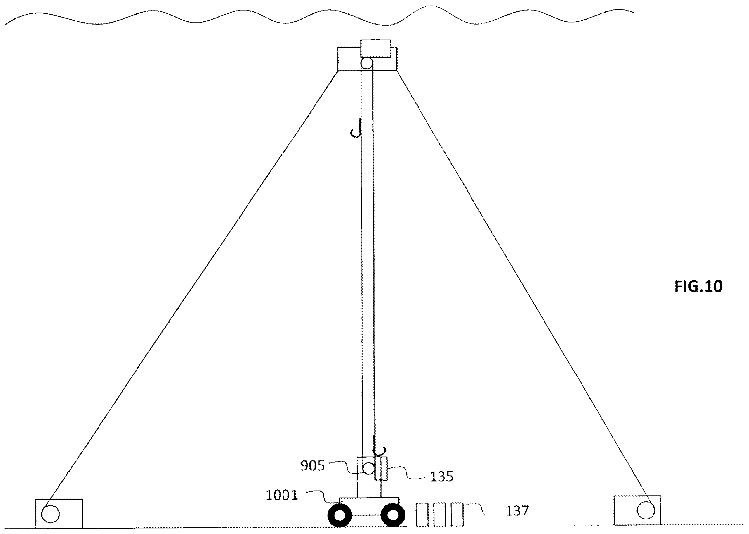

La figure 10 présente une variante du système illustré sur la figure 9. La poulie de renvoi (905) est fixée à un châssis mobile (1001) monté sur des roues motrices ou des chenilles et permet d'améliorer la précision de la pose des poids (en phase de production d'électricité) ou de saisie des poids (en phase de stockage d'énergie) des sur le fond marin.

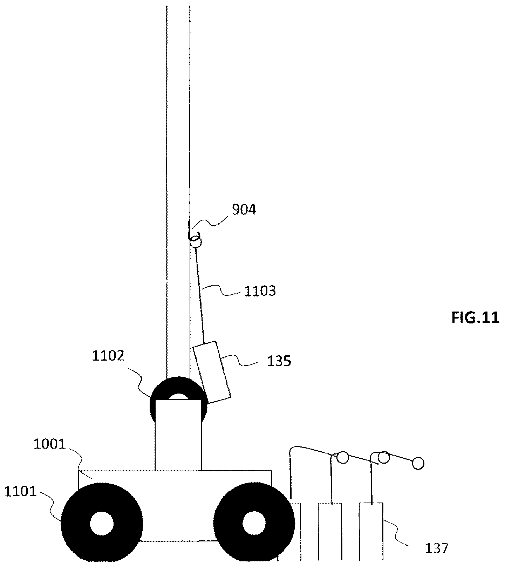

La figure 11 présente en vue de profil, de façon plus détaillée, le chariot et fait apparaître des roues (1102) permettant de guider le poids autour de la poulie de renvoi sans entrer en contact avec ladite poulie. Les roues 1102 sont avantageusement revêtues en leur surface de matériaux souples et résistants. La figure présente un chariot monté sur des roues (1101). L'invention prévoit également des variantes selon lesquelles le chariot est monté sur des chenilles ou des roues posées sur des rails.

La figure fait également apparaître des élingues fixes (1103) reliant le poids (135) au crochet (904). De telles élingues non présentées sur les autres figures peuvent être fixées de façon permanente à chacun des poids compris dans le système.

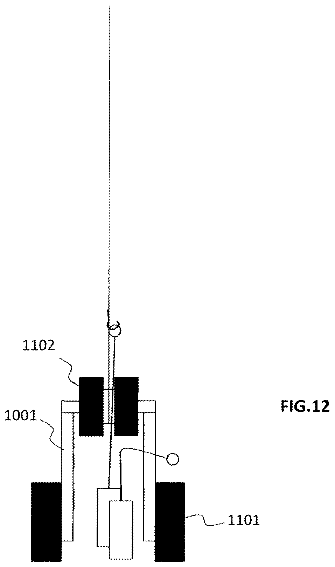

La figure 12 présente le chariot en vue de face le chariot illustré de profil sur la figure 11.

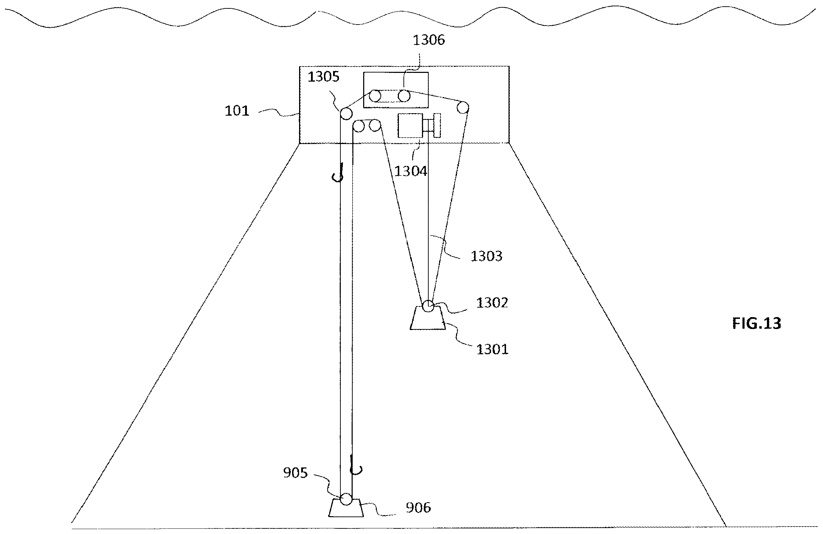

La figure 13 montre un mécanisme permettant de faire varier la longueur du câble d'ascenseur entre la plateforme PAG (101) et la poulie de renvoi (905). Ce système permet notamment d'adapter la longueur de câble nécessaire lorsque la plateforme PAG n'est pas positionnée à la verticale du point de dépôt et de saisie des poids sur le fond marin, par exemple lorsque des courants sous-marins génère de l'obliquité ou une courbure sur le câble de l'ascenseur ou pour compenser le phénomène d'élongation ou de rétrécissement que subit le câble lorsqu'il est respectivement chargé ou déchargé d'un poids. Ce système comprend notamment un treuil (1304) relié à une poulie de renvoi (1302) tendue par un poids (1301) agencés de façon à ce que le câble d'ascenseur passe par l'ensemble des poulies motrices (1306), par des poulies de renvoi situées sur la plateforme PAG (1305) et par une poulie de renvoi (1302) située sur le poids (1301).

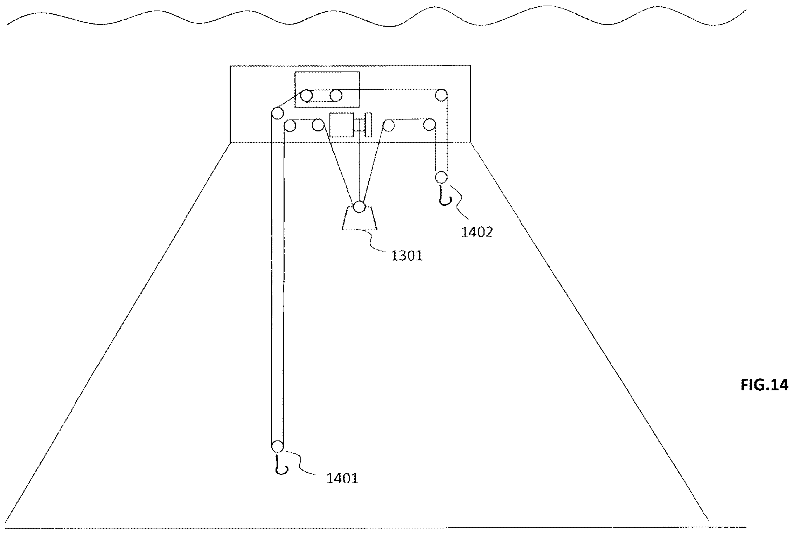

La figure 14 présente un mécanisme permettant de faire varier la longueur du câble d'un ascenseur selon une variante comprenant un câble et deux palans (1401, 1402).

La figure 15 illustre une variante selon laquelle les crochets (105) sont solidarisés au câble de l'ascenseur (104) par l'intermédiaire d'une unité de positionnement (1502) et de propulseurs (1501) permettant d'orienter la position du crochet afin de contrôler ses mouvements giratoires et ses mouvements de translation horizontaux. L'unité de positionnement peut comprendre des systèmes de contrôle de la position tels que gyroscopes, boussoles, caméras , profondimètres et sonar, et des systèmes d'alimentation tels que batteries ou câbles électriques d'alimentation (1504) reliés à une station de distribution d'électricité non présentée sur la figure et pouvant se trouver en surface, sous la surface ou sur le fond du plan d'eau.

La figure 16 présente une variante du système présenté sur la figure 15, selon lequel le mécanisme de contrôle du mouvement giratoire est effectué par des ailerons (1601) lors des phases ascendantes ou descendantes.

L'invention peut comprendre une combinaison des systèmes présentés sur la figure 15 et 16.

La figure 17 présente une variante selon laquelle le crochet (105) est porté par deux palans (1701, 1702) positionnés de part et d'autre d'une poutre (1703) autour de l'axe du crochet.

Les palans peuvent être parcourus par des câbles dont le sens de câblage des torons est inversé et ainsi réduire l'effet giratoire global sur le crochet y compris sur des profondeurs très importantes telle que les profondeurs océaniques (4000 mètres).

La figure 18 présente des jeux de poulies distincts (1801, 1802) pour chacun des deux palans présentés sur la figure 17. Les ensembles de poulies motrices (1803 et 1804) peuvent être accouplés au même réducteur, au même moteur et au même générateur électrique.

La figure 19 illustre un mécanisme composé de poulies de renvoi (1902, 1903) et de flotteurs (1902) permettant d'orienter transversalement le mouvement des crochets de l'ascenseur en tendant des câbles (1904) de part et d'autre de chaque crochet.

Ces câbles permettent de limiter les mouvements giratoires des crochets et de compenser partiellement la variation du poids de la portion de câble d'ascenseur sur un palan pendant la durée d'un cycle d'ascension ou de descente et en conséquence de limiter les variations du ratio couple/puissance exercé au niveau du moteur et du générateur électrique.

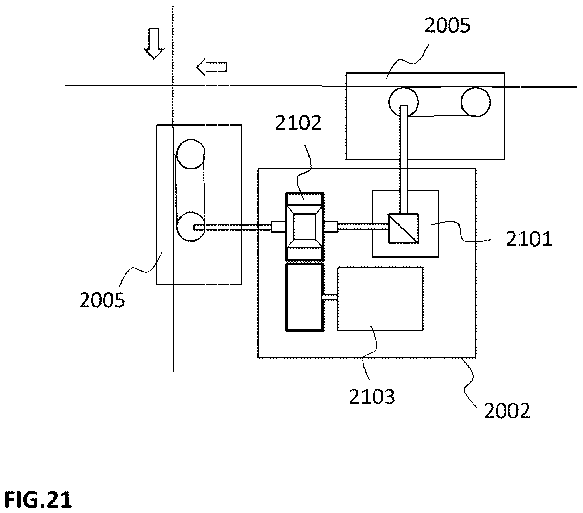

La figure 20 illustre une variante du système d'ascenseur générateur. Dans ce système, chaque crochet (105) est suspendu à une poutre (2201) fixée à deux éléments de câble (2202 et 2203). Chaque élément de câble passe en sa partie inférieure par une poulie de renvoi inférieure (2001) et en sa partie supérieure par une poulie de renvoi supérieure (2004) positionnée sur la plateforme (101). Entre les poulies de renvoi supérieures, les éléments de câble passent par des jeux de poulies motrices (2002) reliées à une boîte à engrenage (2006) présentée sur la figure 21. Un tel système permet d'éviter que les masses (135) n'entrent en contact avec les poulies inférieures lorsqu'elles s'approchent du fond marin. Il permet également d'éviter de recourir au système de roue (1102) tel que présenté sur la figure 11. Les éléments de câble 2202 et 2203 font partie d'un câble unique auquel est suspendu le deuxième crochet via une deuxième poutre (2204).

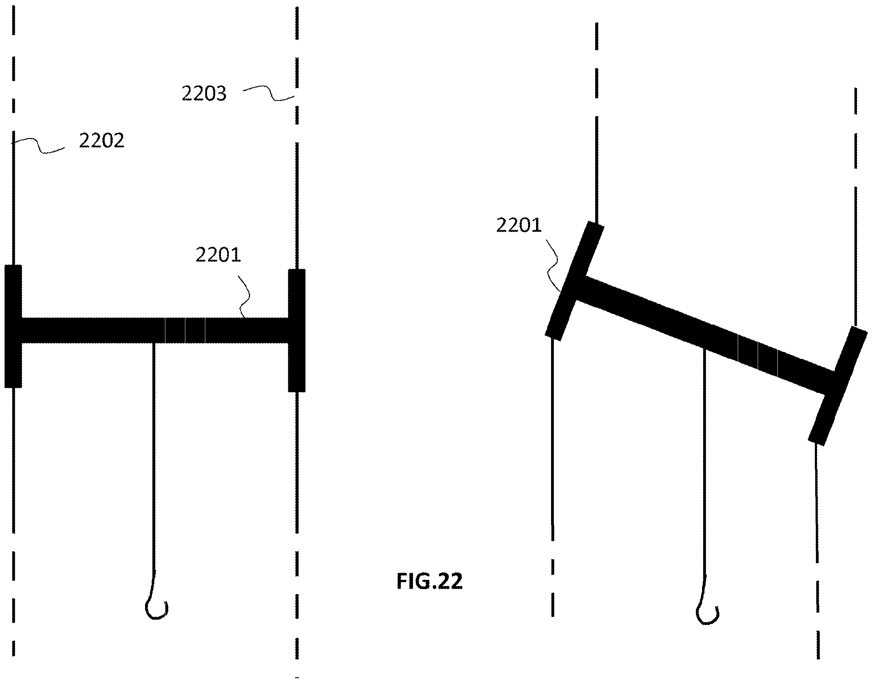

La figure 21 illustre une façon avantageuse de résoudre le problème de déséquilibre de la poutre (2201) lorsque les câbles (2202 et 2203) subissent un décalage. Un tel décalage, illustré sur la figure 22, peut survenir à cause du glissement accidentel du câble dans les jeux de poulies motrices (2005). Son effet est potentiellement important du fait de la hauteur totale de l'ascenseur générateur, prévu pour fonctionner sur des dénivelés de plusieurs milliers de mètres. Lorsque ce phénomène se produit, le câble dont le point de jonction à la poutre (2201) est le plus haut exerce une force plus importante sur son jeu de poulies motrices (2005). Les deux jeux de poulies motrices subissent donc un couple différent. Selon cette variante, les deux jeux de poulies sont reliés à un moteur générateur (2103) par le biais d'une boîte d'engrenages à renvoi d'angle (2101) et d'un engrenage différentiel (2102) qui permet de corriger le décalage.

Numéros de référence employés dans les figures :
101 Plateforme (PAG) supportant l'ascenseur générateur
102 Ensemble moteur générateur réducteur embrayage
103 Poulie de renvoi
104 Câble de l'ascenseur générateur
106 Câble d'ancrage (de la plateforme PAG)
120 Plateforme flottante
122 Transformateur convertisseur électrique
123 Câble électrique entre PAG (106) et plateforme flottante
124 Câble électrique entre la plateforme flottante (120) et le réseau électrique
125 Surface du plan d'eau
126 Fond du plan d'eau
127 Conduit principal
131 Plateforme (PAP) d'accrochage des poids
132 Flotteur souple rempli
133 Flotteur souple vide
134 Câble d'accrochage des masses (135)
135 Poids (en position haute)
136 Câble d'ancrage de la plateforme PAP
137 Poids (en position basse)
201 Treuils reliant PAP et les câbles d'ancrage
205 Conduit de gaz comprimé
202 Dispositif de distribution du gaz comprimé
203 Flotteur de câble d'ancrage
204 Crochet de câble d'ancrage
207 Robot sous-marin ROV
301 Ballast vide
302 Ballast rempli
401 Câble d'accroche coulissant
402 Flotteur souple rempli accroché à câble coulissant
403 Flotteur souple vide accroché à câble coulissant
404 Orifice de passage de câble coulissant 401
405 Dispositif de commande du système de blocage
406 Circuit reliant le dispositif de commande (405) et le système de blocage
502 Ballast vide accroché à câble coulissant
503 Ballast rempli accroché à câble coulissant
601 Plateforme PAP comprenant une plateforme PAG
603 Ailerons
604 Propulseurs
605 Plateforme PAG intégrée à une plateforme PAP
606 Rail
701, 702 Plateformes PAG intégrées à une plateforme PAP
703 Câble d'ancrage de plateforme PAP comprenant plusieurs plateformes PAG
801 Haubans
901 Poulie supérieure d'ascenseur
902 Câble d'ascenseur fermé
903, 904 crochets fixés sur un câble 902
905 Poulie inférieure d'ascenseur
906 Poids de tension inférieur
907 Treuil de câble d'ancrage
1001 Charriot
1101 Roue motrice ou directrice de charriot
1102 Rouleau de déviation de poids 135
1103 Elingue fixée au poids 135
1301 Poids de tension supérieur
1302 Poulie de renvoi du poids 1301
1303 Câble du treuil 1304
1304 Treuil de régulation de la profondeur du poids de tension 1301
1305 Poulie de renvoi supérieure
1306 Poulie motrice
1401, 1402 Palans
1501 Propulseur
1502 Unité de positionnement du crochet
1503 Câble reliant l'unité de positionnement 1502 au crochet 105
1601 Aileron de contrôle des mouvements giratoires
1701, 1702 Palans
1703 Poutre de jonction des palans 1701 et 1702
1801, 1802 jeux de poulies supérieures
1803, 1804 jeux de poulies motrices
1901 Flotteur de tension des câbles 1904
1902 Poulie de renvoi de flotteur 1901
1903 Poulie de renvoi fixée sur le fond du plan d'eau
1904 Câbles latéraux des crochets 105
2001 Poulie de renvoi inférieure2002 Ensemble comprenant un moteur / générateur et des engrenages
2003 Flèche indiquant le mouvement des éléments de câble présentés sur la figure
2004 Poulies de renvoi supérieures
2005 Poulies motrices
2101 Boîte d'engrenages à renvoi d'angle
2102 Engrenage différentiel
2103 Moteur / générateur électrique2202 Elément de câble servant de point d'appui à la poutre 2201
2203 Elément de câble servant de point d'appui à l'autre extrémité de la poutre 2201

L'invention concerne aussi un procédé de stockage et génération d'énergie électrique pour milieu aquatique ou subaquatique, comportant les étapes consistant à :
- en mode générateur, assurer la descente en zone de fond (126) d'une pluralité
de poids (135) à l'aide d'un ascenseur-générateur (100) reliant une plateforme PAG (101) supportant ledit ascenseur flotteur principal positionnée sensiblement sous la surface à une zone de fond (126), de sorte que la force exercée par les poids (135) permette à l'ascenseur-générateur (100) d'actionner un moteur réversible (102) en mode de production d'énergie électrique, et en mode moteur, de remonter vers un profondeur située quelques dizaines de mètres sous la surface, à l'aide de l'ascenseur générateur (100), lesdits poids, le moteur-réversible (102) étant alors en mode moteur et assurant la motricité de l'ascenseur-générateur (100).

On comprendra que le système de stockage et génération d'énergie électrique pour milieu aquatique ou subaquatique selon l'invention peut comprendre aussi les éléments ou caractéristiques suivantes :
- des câbles d'ancrage des plateformes PAP agencés sous forme de haubans (801), et pouvant intégrer des capteurs de type jauges de contrainte (8012).
- la partie inférieure de l'ascenseur générateur peut-être reliée à une ou plusieurs poulies de renvoi (905) placées sur un support (1001) capable de se mouvoir sur le fond du plan d'eau avec des roues, des chenilles ou tout autre moyen de locomotion mécanisé.
- la partie inférieure de l'ascenseur générateur est reliée à une ou plusieurs poulies de renvoi (905) protégée par un ou plusieurs rouleaux (1102) agencés de façon à déporter les poids lorsque lesdits poids passent à proximité des poulies de renvoi inférieures (905).

- l'ascenseur générateur (100) comprend un nombre paire de palans (1701) dont chaque moufle est relié à un même crochet (105) et parcourus de câbles (104) dont le sens de câblage des torons est inversé entre deux palans se succédant sur la poutre (1703).
- les crochets (105) de l'ascenseur générateur sont reliés à des câbles (1904) tendus en permanence en passant par une ou plusieurs poulies de renvoi (1903) fixées sur le fond marin et une poulie de renvoi (1902) fixée sur un flotteur (1901).

## Revendications

1. Système de stockage et génération d'énergie électrique pour milieu aquatique ou subaquatique, comportant
- une pluralité de poids (135) immergés,
- un ascenseur -générateur (100), apte à coopérer avec chacun des poids (135) et disposé pour permettre, en mode générateur, la descente en zone de fond (126) desdits poids, et, en mode moteur, de remonter vers la surface (125) lesdits poids,
- une plateforme sous-marine PAG (101) apte à supporter sous la surface la portion supérieure de l' ascenseur-générateur; ladite plateforme comprenant des éléments flottants et des câbles d'ancrage lui permettant d'être stabilisée à une profondeur donnée,
- un moteur-réversible (102), coopérant avec l'ascenseur générateur (100) et permettant, en mode générateur, la production d'énergie électrique grâce à l'action des poids (135) lors de leur descente, et, en mode moteur, l'actionnement de l'ascenseur-générateur (100) pour effectuer une remontée des poids (135);
le système **caractérisé en ce qu'**il comporte
- une plateforme sous-marine d'accrochage et de décrochage de masse PAP (131) ancrée au fond marin et comportant une pluralité de flotteurs (132) à volume de gaz variable permettant d'ajuster en permanence le pouvoir flottant de ladite plateforme en fonction du nombre de poids (135) qui lui sont accrochés, la plateforme étant configurée pour permettre l'accrochage dedits poids (135) à l'ascenseur-générateur avant le décrochage desdits poids (135) de la plateforme PAP en phase de production d'électricité et inversement en phase de stockage; et **en ce que**
- la plateforme sous-marine PAG (101) supporte l'ascenseur-générateur lorsque celui-ci est chargée ou déchargé de poids (135).

2. Système de stockage et génération d'énergie électrique pour milieu aquatique ou subaquatique selon la revendication 1, dans lequel le moteur réversible (102) est porté par la plateforme PAG (101) supportant l'ascenseur générateur et coopère avec la portion supérieure de l'ascenseur générateur (100).

3. Système de stockage et génération d'énergie électrique pour milieu aquatique ou subaquatique selon l'une des revendications 1 ou 2, dans lequel l'ascenseur générateur (100) est constitué par un ensemble de poulies (103) actionnant un câble (104) entre la plateforme PAG (101) et le fond (126).

4. Système de stockage et génération d'énergie électrique pour milieu aquatique ou subaquatique selon la revendication 3, dans lequel l'ensemble de poulies comporte au moins une poulie proche de la surface (103) portée par la plateforme PAG (101) et une poulie de fond (905).

5. Système de stockage et génération d'énergie électrique pour milieu aquatique ou subaquatique selon la revendication 4, dans lequel la poulie de surface (103) coopère mécaniquement avec le moteur réversible (102) par l'entremise d'une transmission

6. Système de stockage et génération d'énergie électrique pour milieu aquatique ou subaquatique selon l'une des revendications 1 ou 2, dans lequel l'ascenseur générateur (100) est constitué par un treuil porté par la plateforme de l'ascenseur générateur PAG (101), un câble de treuil (104) et au moins un crochet (105).

7. Système de stockage et génération d'énergie électrique pour milieu aquatique ou subaquatique selon la revendication 1, dans lequel la partie inférieure del' ascenseur générateur est reliée à une ou plusieurs poulies de renvoi (905) placées sur un support (1001) capable de se mouvoir sur le fond du plan d'eau avec des roues, des chenilles ou tout autre moyen de locomotion mécanisé.

8. Système de stockage et génération d'énergie électrique pour milieu aquatique ou subaquatique selon la revendication 1, dans lequel le câble, de l'ascenseur générateur (104) peut être tendu en permanence par l'entremise d'un mécanisme comprenant une ou plusieurs poulies de renvoi (1302) dont la position peut varier en les fixant sur un poids (1301) accroché à un treuil (1304).

9. Système de stockage et génération d'énergie électrique pour milieu aquatique ou subaquatique selon la revendication 1, dans lequel chacun des flotteurs (132) de la plateforme PAP (131) comporte une commande de gestion des flux fluidiques (205) de la quantité de gaz en coopération fluidique avec l'intérieur du flotteur (1321) et un compresseur (121).

10. Système de stockage et génération d'énergie électrique pour milieu aquatique ou subaquatique selon la revendication 1, dans lequel les mouvements giratoires et transversaux des crochets (105) du câble (104) de l'ascenseur générateur (100) sont contrôlés par des propulseurs (1501), des ailerons mobiles (1601) et des instruments de mesure tels que gyroscopes (15021), boussoles (15022), caméras (15023), profondimètres (15024) et sonar (15025).

11. Système de stockage et génération d'énergie électrique pour milieu aquatique ou subaquatique selon la revendication 1, dans lequel les flotteurs sont constitués d'un ballast (301) pouvant être rempli ou vidé d'eau par un orifice (303)communiquant entre ledit ballast et l'extérieur du système.

12. Système de stockage et génération d'énergie électrique pour milieu aquatique ou subaquatique selon la revendication 10 et/ou 11 selon lequel le volume de gaz compris dans les flotteurs est adapté de façonn à équilibrer la plateforme PAP en fonction du nombre depoids accrochés sous lesdits flotteurs.

13. Système de stockage et génération d'énergie électriquepour milieu aquatique ou subaquatique selon la revendication 10 ou 11, dans lequel les flotteurs souples (402) ou ballasts (502) de la plateforme sous-marine PAP sont solidarisés à ladite plateforme par un câble de longueur variable, de telle sorte que le volume de gaz qu'ils contiennent soit ajusté afin d'équilibrer les pressions internes et externes à la profondeur desdits flotteurs et ballasts.

14. Système de stockage et génération d'énergie électriquepour milieu aquatique ou subaquatique selon l'une des revendications précédentes, **caractérisé en ce que** la plateforme PAG (101) supportant l'ascenseur générateur est comprise comme élément mobile de la plateforme PAP ( 131) servant de support d' accrochage pour les poids stockés en position haute.

15. Système de stockage et génération d'énergie électrique pour milieu aquatique ou subaquatique selon la revendication 1, dans lequel l'ascenseur générateur (100) comprend un nombre paire de palans (1701) dont chaque moufle est relié à un même crochet (105) et parcourus de câbles (104) dont le sens de câblage des torons est inversé entre deux palans se succédant sur la poutre (1 703) .

## Patentansprüche

1. Elektrisches Energieerzeugungs- und Speichersystem für aquatische und subaquatische Umgebungen, umfassend:
- eine Vielzahl von versenkten Gewichten (135),
- einen Aufzug-Generator (100), der geeignet ist, mit jedem der Gewichte (135) zusammenzuwirken und angeordnet ist, um im Generatormodus das Absenken in den Bodenbereich (126) der genannten Gewichte zu ermöglichen und im Motormodus die genannten Gewichte wieder zur Oberfläche (125) aufsteigen zu lassen,
- eine Unterwasser-Plattform PAG (101), die geeignet ist, unter der Oberfläche den oberen Abschnitt des Aufzug-Generators zu unterstützen; wobei die genannte Plattform schwimmende Elemente und Verankerungskabel umfasst, die es ihm ermöglichen, in einer bestimmten Tiefe stabilisiert zu sein,
- einen Umkehrmotor (102), der mit dem Aufzug- Generator (100) zusammenwirkt und im Generatormotor die Erzeugung von elektrischer Energie dank der Wirkung der Gewichte (135) bei ihrem Absenken und im Motormodus die Betätigung des Aufzug-Generators (100) ermöglicht, um einen Wiederaufstieg der Gewichte (135) durchzuführen;
wobei das System **dadurch gekennzeichnet ist, dass** es umfasst:
- eine Unterwasser-Befestigungs- und Masseausklink-Plattform PAP (131), die im Meerboden verankert ist und eine Vielzahl von Schwimmern (132) mit variablem Gasvolumen umfasst, die das permanente Anpassen der Schwimmfähigkeit der genannten Plattform in Abhängigkeit von der Anzahl an Gewichten (135) ermöglicht, die an ihm befestigt sind, wobei die Plattform dazu ausgelegt ist, um das Befestigen der genannten Gewichte (135) am Aufzug-Generator vor dem Ausklinken der genannten Gewichte (135) der Plattform PAP in der Stromerzeugungsphase und umgekehrt in der Speicherphase zu ermöglichen; und dass
- die Unterwasser-Plattform PAG (101) den Aufzug-Generator unterstützt, wenn dieser mit Gewichten (135) beladen oder entladen ist.

2. Elektrisches Energieerzeugungs- und Speichersystem für aquatische und subaquatische Umgebungen gemäß Anspruch 1, bei dem der Umkehrmotor (102) von der Plattform PAG (101) getragen ist, die den Aufzug-Generator unterstützt und mit dem oberen Abschnitt des Aufzug-Generators (100) zusammenwirkt.

3. Elektrisches Energieerzeugungs- und Speichersystem für aquatische und subaquatische Umgebungen gemäß einem der Ansprüche 1 oder 2, bei dem der Aufzug-Generator (100) durch eine Gruppe von Seilscheiben (103) gebildet ist, die ein Kabel (104) zwischen der Plattform PAG (101) und dem Boden (126) betätigen.

4. Elektrisches Energieerzeugungs- und Speichersystem für aquatische und subaquatische Umgebungen gemäß Anspruch 3, bei dem die Gruppe Seilscheiben wenigstens eine Seilscheibe, die nahe der Oberfläche (103) ist, von der Plattform PAG (101) getragen ist und eine Boden-Seilscheibe (905) umfasst.

5. Elektrisches Energieerzeugungs- und Speichersystem für aquatische und subaquatische Umgebungen gemäß Anspruch 4, bei dem die Oberflächen-Seilscheibe (103) durch das Einwirken einer Übertragung mechanisch mit dem Umkehrmotor (102) zusammenwirkt.

6. Elektrisches Energieerzeugungs- und Speichersystem für aquatische und subaquatische Umgebungen gemäß einem der Ansprüche 1 oder 2, bei dem der Aufzug-Generator (100) aus einer Seilwinde, die von der Plattform des Aufzug-Generators PAG (101) getragen ist, einem Seilwinden-Kabel (104) und wenigstens einem Haken (105) gebildet ist.

7. Elektrisches Energieerzeugungs- und Speichersystem für aquatische und subaquatische Umgebungen gemäß Anspruch 1, bei dem der untere Teil des Aufzug-Generators mit einer oder mehreren Umlenkrolle(n) (905) verbunden ist, die auf einem Träger (1001) angeordnet ist/sind, der geeignet ist, sich auf dem Boden einer Wasserfläche mit Rädern, Laufketten oder jedem anderen mechanisierten Bewegungsmittel zu bewegen.

8. Elektrisches Energieerzeugungs- und Speichersystem für aquatische und subaquatische Umgebungen gemäß Anspruch 1, bei dem das Kabel des Aufzug-Generators (104) permanent durch das Einwirken eines Mechanismus gespannt sein kann, der eine oder mehrere Umlenkrolle(n) (1302) umfasst, deren Position variieren kann, indem sie auf einem Gewicht (1301) befestigt sind, das an einer Seilwinde (1304) befestigt ist.

9. Elektrisches Energieerzeugungs- und Speichersystem für aquatische und subaquatische Umgebungen gemäß Anspruch 1, bei dem jeder Schwimmer (132) der Plattform PAP (131) einen Steuerbefehl der fluidischen Ströme (205) der Gasmenge in fluidischem Zusammenwirken mit dem Innern des Schwimmers (1321) und einen Kompressor (121) umfasst.

10. Elektrisches Energieerzeugungs- und Speichersystem für aquatische und subaquatische Umgebungen gemäß Anspruch 1, bei dem die Dreh- und Querbewegungen der Haken (105) des Kabel (104) des Aufzug-Generators (100) von Antrieben (1501), mobilen Klappen (1601) und Messinstrumenten, wie z. B. Gyroskopen (15021), Kompassen (15022), Kameras (15023), Tiefenmessern (15024) und Sonar (15025) kontrolliert sind.

11. Elektrisches Energieerzeugungs- und Speichersystem für aquatische und subaquatische Umgebungen gemäß Anspruch 1, bei dem die Schwimmer aus einem Ballast (301) gebildet sind, der durch eine Öffnung (303), die zwischen dem genannten Ballast und der Außenseite des Systems in Verbindung steht, mit Wasser befüllt oder entleert sein kann.

12. Elektrisches Energieerzeugungs- und Speichersystem für aquatische und subaquatische Umgebungen gemäß Anspruch 10 und/oder 11, nach dem das in den Schwimmern umfasste Gasvolumen derart geeignet ist, dass es die Plattform PAP in Abhängigkeit von der Anzahl der angehängten Gewichte, die unter den genannten Schwimmern befestigt sind, ausgleicht.

13. Elektrisches Energieerzeugungs- und Speichersystem für aquatische und subaquatische Umgebungen gemäß Anspruch 10 oder 11, bei dem die elastischen Schwimmer (402) oder die Ballaste (502) der Unterwasser-Plattform PAP an der genannten Plattform durch ein Kabel mit variabler Länge derart fest befestigt sind, dass das Gasvolumen, das sie enthalten, angepasst ist, um die Innen- und Außendrücke an die Tiefe der genannten Schwimmer und Ballaste auszugleichen.

14. Elektrisches Energieerzeugungs- und Speichersystem für aquatische und subaquatische Umgebungen gemäß einem der voranstehenden Ansprüche, **dadurch gekennzeichnet, dass** die Plattform PAG (101), die den Aufzug-Generator unterstützt, als mobiles Element der Plattform PAP (131), die als Befestigungsstütze für die in hoher Position gelagerten Gewichte dient, umfasst ist.

15. Elektrisches Energieerzeugungs- und Speichersystem für aquatische und subaquatische Umgebungen gemäß Anspruch 1, bei dem der Aufzug-Generator (100) eine gerade Anzahl von Flaschenzügen (1701) umfasst, von denen jeder Block mit einem und demselben Haken (105) verbunden und von Kabeln (104) durchlaufen ist, deren Verkabelungsrichtung der Litzen zwischen zwei Flaschenzügen, die auf dem Balken (1703) aufeinander folgen, umgekehrt ist.

## Claims

1. Storage system and generation of electrical energy in an aquatic or underwater environment, comprising:
- a plurality of submerged weights (135),
- a generator lift (100) capable of cooperating with each of the weights (135) and arranged, in generation mode, to allow said weights to descend to the bottom zone (126) and, in drive mode, to raise them back up towards the surface (125),
- an underwater PAG platform (101) capable of supporting below the surface the upper portion of the generator lift; said platform comprising floating elements and anchoring cables which allow it to be stabilised at a given depth,
- a reversible motor (102), cooperating with the generator lift (100) and allowing, in generation mode, the production of electrical energy due to the action of the weights (135) as they descend, and, in drive mode, actuation of the generator lift (100) to raise the weights (135) back up; the system **characterised in that** is comprises:
- an underwater platform for attaching and detaching PAP weights (131) anchored on the sea bottom and comprising a plurality of floats (132) with a variable volume of gas permitting the floating capacity of the said platform to be adjusted permanently, the said platform being configured so as to enable the said weights (135) to be detached to the generator lift before the said weights (135) are detached from the PAP platform during the electricity production phase and vice versa during the storage phase, and it that,
- underwater platform PAG (101) supports the generator lift when is loaded or unloaded with weights (135).

2. Storage system and generation of electrical energy in an aquatic or underwater environment according to claim 1, in which the reversible motor (102) is carried by the PAG platform (101) supporting the generator lift and cooperates with the upper portion of the generator lift (100).

3. Storage system and generation of electrical energy in an aquatic or underwater environment according to one of claims 1 or 2, in which the generator lift (100) consists of a pulley assembly (103) actuating a cable (104) between the PAG platform (101) and the bottom (126).

4. Storage system and generation of electrical energy in an aquatic or underwater environment according to claim 3, in which the pulley assembly comprises a surface pulley (103) e by the PAG platform (101) and a bottom pulley (905).

5. Storage system and generation of electrical energy in an aquatic or underwater environment according to claim 4, in which the surface pulley (103) cooperates mechanically with the reversible motor (102) via a transmission.

6. Storage system and generation of electrical energy in an aquatic or underwater environment according to one of claims 1 or 2, in which the generator lift (100) consists of a winch carried by the PAG generator lift platform (101), a winch cable (104) and at least one hook (105).

7. Storage system and generation of electrical energy in an aquatic or underwater environment according to claim 1, wherein the lower part of the generator lift is connected to one or more return pulleys (905) placed on a support (1001) capable of moving on the bottom of the body of water with wheels, tracks, or any means of mechanized locomotion.

8. Storage system and generation of electrical energy in an aquatic or underwater environment according to claim 1, wherein the cable, of the elevator generator (104) can be permanently stretched by through a mechanism comprising one or more return pulleys (1302) which position can vary by fixing them to a weight (301) attached to a winch (1304).

9. Storage system and generation of electrical energy in an aquatic or underwater environment according to claim 1, wherein each of the floats (132) of the PAP platform (131) comprises a fluidic flow management control (205) of the amount of gas in fluidic cooperation with the inside of the float (1321) and a compressor (121).

10. Storage system and generation of electrical energy in an aquatic or underwater environment according to the claim 1, wherein the gyratory and transverse movements of the hooks (105) of the cable (104) of the generator lift (100) are controlled by thrusters (1501), movable fins (1601) and measuring instruments such as gyroscopes (15021), Compasses (15022), cameras (15023), depth gauges (15024) and sonar (15025).

11. Storage system and generation of electrical energy in an aquatic or underwater environment according to claim 1, in which the floats consist of a ballast tank (301) which can be filled with or emptied of water via an orifice (303) which communicates between said ballast tank and the exterior of the system.

12. Storage system and generation of electrical energy in an aquatic or underwater environment according to claim 10 and/or 11, wherein the volume of gas present in the floats is adapted so as to balance the PAP platform according to the number of weights attached under said floats.

13. Storage system and generation of electrical energy in an aquatic or underwater environment according to claim 10 or 11, wherein the flexible floats (402) or ballast tank (502) of the underwater PAP platform are fastened to said platform by a cable of variable length, in such a manner that the volume of gas they contain is adjusted to balance the internal and external pressures at the depth of said floats and ballast.

14. Storage system and generation of electrical energy in an aquatic or underwater environment according to one of the previous claims, wherein the PAG platform (101) supporting the generator lift is taken to be a mobile element of the PAP platform (131) serving as an attachment support for the weights stored in the upper position.

15. Storage system and generation of electrical energy in an aquatic or underwater environment according to claim 1, wherein the generator lift (100) comprises an even number of hoists (1701) each of which muffle is connected to the same hook (105) and traversed by cables (104 whose direction of wiring of the strands is reversed between two hoists succeeding each other on the beam (1703).
